# EUROPEAN PATENT APPLICATION

(11) **EP 4 675 438 A1**
(43) Date of publication of application: **07.01.2026**
(21) Application number: 25168566.5
(22) Date of filing: 04.04.2025
(51) Int. Cl.: G06F 11/10, G06F 11/14

(54) **FILE PROCESSING METHOD, APPARATUS, AND ELECTRONIC DEVICE**

(30) Priority: 04.07.2024 CN 202410896743
(71) Applicant: Beijing Volcano Engine Technology Co., Ltd., Beijing 100190 (CN)
(72) Inventor: WANG, Honghao, Chaoyang District, Beijing, 100028 (CN)
(74) Representative: Marks & Clerk LLP

(57) **Abstract**

Embodiments of the present disclosure provide a file processing method and apparatus, and an electronic device. The method includes: acquiring (S101, S201, S301) additional data written to a file end of a target file, where data in the target file is stored based on a strip, and a data end of the additional data is located in a middle of a target strip; obtaining (S102) a corresponding redundant storage policy according to an occupancy of the additional data in the target strip; generating (S102) a restoration record of the additional data based on the redundant storage policy; and writing (S103, S207, S305) the restoration record into a disk. Since the influence of different occupancies of the additional data in the target strip on the generation efficiency and space occupancy of the restoration record is considered, the generation efficiency of the restoration record generated based on the redundant storage policy can be improved, and the space occupancy of the restoration record can be reduced. In addition, problems of large data volume, low encoding efficiency and the like caused by generating the restoration record by fixedly writing zero values into the strip for rounding are avoided.

## Description

### FIELD

Embodiments of the present disclosure relate to a field of cloud computing, and in particular, to a file processing method and apparatus, and an electronic device.

### BACKGROUND

Currently, in data service applications in cloud computing and cloud service scenarios, data is written into a file for storage in response to a data storage request from a service side, so as to implement data persistence. In this process, in order to avoid data loss caused by file corruption, a restoration record is saved in the file, so that when a part of the data in the file is corrupted or lost, all valid data in the file can still be restored, thereby ensuring data security.

In the prior art, when writing data into a file which is based on strip storage, for data that cannot form a complete strip, a complete strip is usually filled by padding zero, and then the complete strip is encoded by a redundant encoding algorithm, so as to form a restoration record.

However, the scheme in the prior art has the problems of low generation efficiency and large space occupancy of restoration records.

### SUMMARY

Embodiments of the present disclosure provide a file processing method and apparatus, and an electronic device to overcome the problems of low generation efficiency and large space occupancy of restoration records in a file.

In a first aspect, embodiments of the present disclosure provide a file processing method, including: acquiring additional data written to a file end of a target file, where data in the target file is stored based on a strip, and a data end of the additional data is located in a middle of a target strip; obtaining a corresponding redundant storage policy according to an occupancy of the additional data in the target strip, and generating a restoration record of the additional data based on the redundant storage policy; and writing the restoration record into a disk.

In a second aspect, embodiments of the present disclosure provide a file processing apparatus, including: an acquiring module, configured to acquire additional data written to a file end of a target file, where data in the target file is stored based on a strip, and a data end of the additional data is located in a middle of a target strip; a processing module, configured to obtain a corresponding redundant storage policy according to an occupancy of the additional data in the target strip, and generate a restoration record of the additional data based on the redundant storage policy; and a writing module, configured to write the restoration record into a disk.

In a third aspect, embodiments of the present disclosure provide an electronic device, including: a processor and a memory; where the memory stores computer executable instructions; and the processor executes the computer executable instructions stored in the memory, to cause at least one processor to execute the file processing method according to the above first aspect and various possible designs of the first aspect.

In a fourth aspect, embodiments of the present disclosure provide a computer-readable storage medium, where the computer-readable storage medium stores computer executable instructions, and when a processor executes the computer executable instructions, the file processing method according to the above first aspect and various possible designs of the first aspect is implemented.

In a fifth aspect, embodiments of the present disclosure provide a computer program product, including a computer program, and when the computer program is executed by a processor, the file processing method according to the above first aspect and various possible designs of the first aspect is implemented.

### BRIEF DESCRIPTION OF THE DRAWINGS

In order to illustrate the technical solutions in embodiments of the present disclosure or in the prior art more clearly, the following briefly introduces the drawings required for describing the embodiments or the prior art. Obviously, the drawings in the following description show some embodiments of the present disclosure, and for those of ordinary skill in the art, other drawings may be obtained according to these drawings without creative efforts.
FIG. 1 is a diagram of an application scenario of a file processing method provided by an embodiment of the present disclosure;
FIG. 2 is a first flowchart of a file processing method provided by an embodiment of the present disclosure;
FIG. 3 is a schematic diagram of a strip provided by an embodiment of the present disclosure;
FIG. 4 is a flowchart of a specific implementation of step S102 in the embodiment shown in FIG. 2;
FIG. 5 is a second flowchart of a file processing method provided by an embodiment of the present disclosure;
FIG. 6 is a flowchart of a possible implementation of step S204A in the embodiment shown in FIG. 5;
FIG. 7 is a schematic diagram of an execution process of a first encoding redundant storage policy provided by an embodiment of the present disclosure;
FIG. 8 is a flowchart of a possible implementation of step S205A in the embodiment shown in FIG. 5;
FIG. 9 is a schematic diagram of an execution process of a second encoding redundant storage policy provided by an embodiment of the present disclosure;
FIG. 10 is a flowchart of a possible implementation of step S206A in the embodiment shown in FIG. 5;
FIG. 11 is a schematic diagram of an execution process of a third encoding redundant storage policy provided by an embodiment of the present disclosure;
FIG. 12 is a third flowchart of a file processing method provided by an embodiment of the present disclosure;
FIG. 13 is a structural block diagram of a file processing apparatus provided by an embodiment of the present disclosure;
FIG. 14 is a schematic structural diagram of an electronic device provided by an embodiment of the present disclosure; and
FIG. 15 is a schematic hardware structural diagram of an electronic device provided by an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be described clearly and completely in conjunction with the drawings in the embodiments of the present disclosure. Obviously, the described embodiments are part of the embodiments of the present disclosure, but not all of them. Based on the embodiments in the present disclosure, all other embodiments obtained by those of ordinary skill in the art without creative efforts shall fall within the protection scope of the present disclosure.

It should be noted that user information (including but not limited to user equipment information, user personal information, etc.) and data (including but not limited to data for analysis, data for storage, data for display, etc.) involved in the present disclosure are information and data authorized by the user or fully authorized by the parties, and the collection, use and processing of relevant data need to comply with relevant laws, regulations and standards of relevant countries and regions, and corresponding operation entries are provided for the user to choose authorization or refusal.

The application scenario of embodiments of the present disclosure is explained below.

The file processing method provided by embodiments of the present disclosure may be applied to an application scenario of a data service, and more specifically, may be applied to specific application scenarios such as block storage, log storage, and object storage. An execution body of the embodiment may be the above-mentioned server that provides the data service, or other electronic devices that perform similar functions. Among them, in some embodiments, the server or the electronic device may implement the file processing method provided by the embodiments of the present application by running various computer executable instructions or computer programs. For example, the computer executable instructions may be program-level commands, machine instructions, or software instructions. The computer program may be a native program or a software module in an operating system; it may be a local application, that is, a program that needs to be installed in the operating system to run, or it may be a cloud application deployed on an external device. To sum up, the above-mentioned computer executable instructions may be instructions in any form, and the above-mentioned computer program may be an application, a module, or a plug-in in any form, and the specific implementation form may be configured as required. Further, in some embodiments, the server may be an independent physical server, or a server cluster or a distributed system composed of a plurality of physical servers, or may be a cloud server that provides basic cloud computing services such as cloud services, cloud storage, cloud communication, cloud database, cloud computing, cloud functions, network services, middleware services, domain name services, security services, content delivery network (Content Delivery Network, CDN), and big data and artificial intelligence platforms, where cloud services may be interactive processing services for other servers or terminal devices to call.

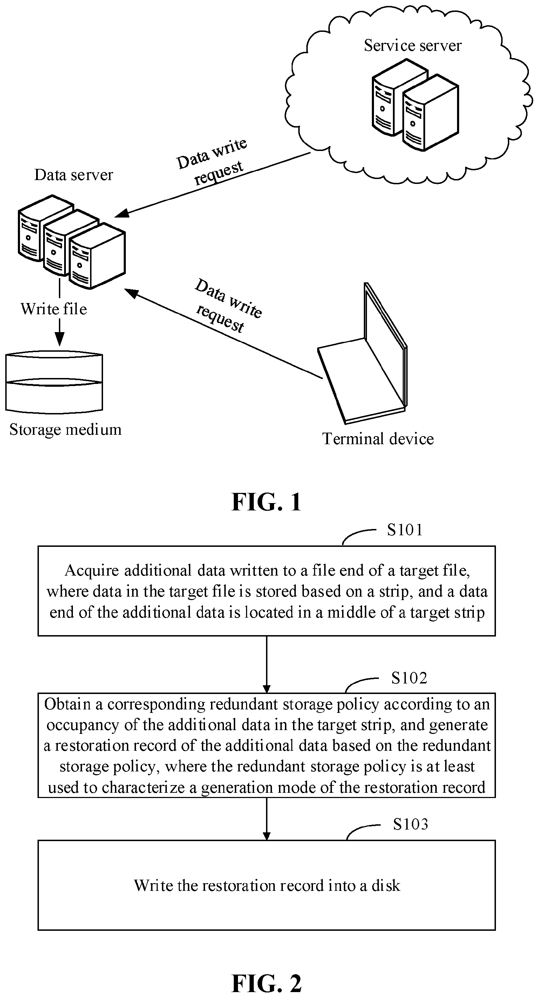

FIG. 1 is a diagram of an application scenario of a file processing method provided by an embodiment of the present disclosure. Referring to FIG. 1, taking a case where a data server is an execution body of the above method as an example, after receiving a data write request sent by another service server or a terminal device, the data server writes specified target data into a target file in a storage medium, that is, writes the file into the storage medium as shown in the figure. At the same time, the data server generates a restoration record for the newly written target data, and also writes it into the target file, thereby implementing redundant storage of data and improving data security. Specifically, the writing mode may be an append-only file (Append-Only File, AOF). The append-only file is a common data persistence mode. When writing data into the file in this way, only data is allowed to be appended to the end of the file, and modification or deletion of data that already exists in the file is not allowed. The method for generating the restoration record is, for example, by performing erasure code encoding (Erasure Coding, EC) after the target data is segmented, thereby generating the restoration record capable of realizing data restoration. The specific implementation principles of the above append-only file and erasure code are the prior art, which will not be repeated here.

In the prior art, when writing data into a file based on strip storage, for data that cannot form a complete strip, a complete strip is usually filled by padding zero, and then the complete strip is encoded by a redundant encoding algorithm, so as to form a restoration record. However, in the scheme in the prior art, padding zeros will permanently occupy storage space, reducing storage efficiency; at the same time, some application scenarios need to additionally record the padding zero length, resulting in additional index overhead, and memory and disk occupancy, thereby causing the problems of low generation efficiency and large space occupancy of restoration records.

An embodiment of the present disclosure provides a file processing method to solve the above problem.

Referring to FIG. 2, which is a first flowchart of a file processing method provided by an embodiment of the present disclosure. The method of this embodiment may be applied to a server, and the file processing method includes the following.

Step S101: additional data written to a file end of a target file is acquired, where data in the target file is stored based on a strip, and a data end of the additional data is located in a middle of a target strip.

Referring to the schematic diagram of the application scenario shown in FIG. 1, in this embodiment, a method provided in this embodiment is introduced by using a server (for example, the data server in FIG. 1) as an execution body. Exemplarily, in a possible implementation, after receiving a data write request sent by another server or terminal device, the server acquires data included in the data write request, or data indicated by the data write request, takes it as the additional data and writes it into the file end of the target file indicated by the data write request. In another possible implementation, the server may obtain corresponding data as the additional data in response to an execution logic of an application or a data service deployed therein, and writes it into the file end of the target file. The process of writing the additional data into the file end of the target file is the process of performing data persistence based on an append-only file mode, and the basic implementation principle thereof will not be repeated. Meanwhile, for the acquisition of the additional data in the step of this embodiment, it may be performed while writing the additional data into the file end of the target file, or may be performed before or after writing the additional data into the file end of the target file, and the specific execution timing may be set as required, which is not specifically limited in this embodiment.

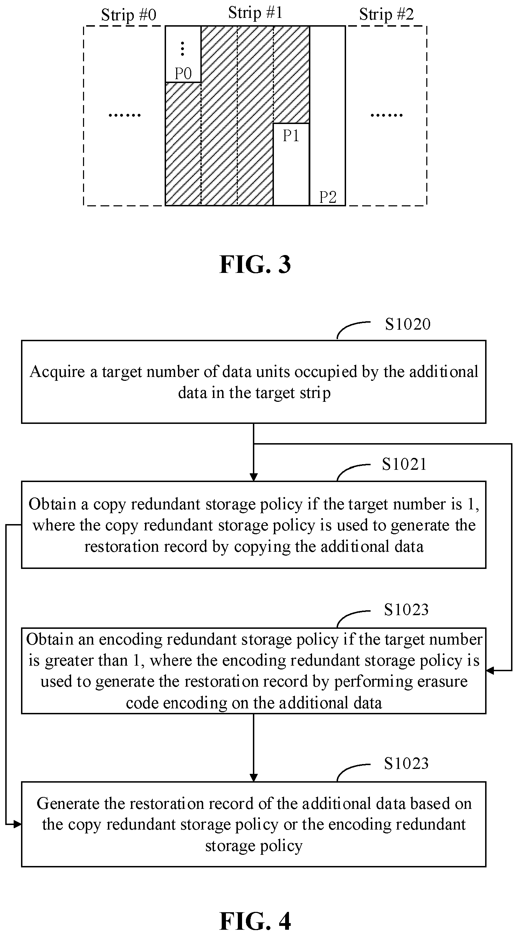

Further, the target file stored in the server is stored based on a strip. The strip storage is a method of dividing continuous data into data blocks of the same size and writing the data blocks into different disks in an array respectively, so as to achieve the objective of combining a plurality of disk drivers into one logical volume, which is common in the field of distributed storage and the like. The specific implementation of the strip will not be further introduced here. The data end of the additional data is located in the middle of the target strip, and the target strip may be determined according to the length of the additional data and the storage condition of the current strip before the additional data is written. The data end of the additional data is located in the middle of the target strip, that is, the additional data cannot exactly fill a strip, that is, there are blank bits between the data end of the additional data and the strip end of the target strip. FIG. 3 is a schematic diagram of a strip provided by an embodiment of the present disclosure. As shown in FIG. 3, before the additional data is written, the file end of the target file is located at the P0 position within the strip #1 (the strip #0 is before the strip #1 and the strip #2 is after the strip #1). On this basis, after the additional data continues to be written into the target file, the end of the additional data is located at the P1 position within the strip #1, and there are blank bits between the P1 position and the end P2 position of the strip #1. That is, the strip #1 is not a complete strip. In the prior art, for the above situation, a common practice is to pad zeros to the incomplete strip. Referring to FIG. 3, that is, padding zeros between the P1 position and the P2 position, so that the strip #1 becomes a complete strip, and then performing subsequent encoding processing on the complete strip after padding zeros, to generate the restoration record. However, the above solution in the prior art may lead to the problems of low generation efficiency and large space occupancy.

Step S102: a corresponding redundant storage policy is obtained according to an occupancy of the additional data in the target strip, and a restoration record of the additional data is generated based on the redundant storage policy, where the redundant storage policy is at least used to characterize a generation mode of the restoration record.

Step S103: the restoration record is written into a disk.

Exemplarily, after the additional data is obtained, the server further obtains the occupancy of the additional data in the target strip, where the occupancy may include a start position and an end position of the additional data in the target strip. Specifically, the occupancy of the additional data in the target strip may be represented by means of a data bit identification, a data offset, etc. corresponding to the start position and the end position. In a possible implementation, the strip includes at least two data units, and the occupancy of the additional data in the target strip may be represented by means of identification of the data unit and an offset in the data unit. For example, P1=[a,b], where a=(2,4); b=(4,3); P1 is the occupancy of the additional data, a represents the position of the data start of the additional data, b represents the position of the data end of the additional data, while a=(2,4) represents that the data start of the additional data is located at the 4th data bit in the data unit 2, and b=(4,3) represents that the data end of the additional data is located at the 3rd data bit in the data unit 4. Certainly, the occupancy may also be represented in other ways, such as an offset of the data start and the data end of the additional data in the target strip, and identification of the target strip, which is not limited in this embodiment.

Afterwards, a redundant storage policy matching a threshold is determined based on the above occupancy of the additional data, and the redundant storage policy is used to characterize the generation mode of the restoration record. Since redundant encoding needs to be performed on the additional data in units of strips to generate the restoration record, this process requires that the data length in each strip is consistent, and after the additional data is written into the file end, it cannot be guaranteed that its length just reaches the strip end to form a complete strip. Further, when the additional data occupies more in the target strip, for example, the additional data almost fills up the target strip, for example, several bytes are still needed to complete the strip, EC encoding will be performed on the last several bytes at the bottom of each unit except the last unit. In this case, the length of the generated restoration record is only the several bytes and a small amount of meta information, and the space occupancy and write traffic are extremely small, which may be regarded as a redundant storage policy. When the additional data occupies less in the target strip, that is, when the data end of the additional data is still separated from the end of the target strip by a large number of blank bits, another redundant storage policy needs to be adopted for processing, for example, directly copying the additional data and then generating the restoration record, thereby avoiding serious efficiency reduction and storage space waste.

That is, based on the above introduction, in this embodiment, at least two alternative redundant storage policies are included, the redundant storage policies are pre-generated, and a mapping relationship between the occupancy of different additional data in the target strip and the redundant storage policy is pre-configured. When it is necessary to determine the redundant storage policy, the corresponding redundant storage policy is determined by the obtained occupancy of the additional data in the target strip and the above mapping relationship. Further, among the above at least two alternative redundant storage policies, one is a strategy of performing redundant encoding after segmenting the target strip to generate the restoration record, and the other is another strategy, e.g., a strategy of directly copying the additional data and then generating the restoration record. The selection of the above two strategies depends on the occupancy of the additional data in the target strip, that is, the corresponding redundant storage policy is obtained according to the occupancy of the additional data in the target strip.

Further, in a possible implementation, the specific implementation of step S102 includes: the corresponding redundant storage policy is obtained according to the number of data units occupied by the additional data in the target strip.

Specifically, the number of data units occupied by the additional data in the target strip is an implementation of the occupancy of the additional data in the target strip. When the number of data units occupied by the additional data in the target strip is different, restoration records matching therewith are selected. Since the number of data units occupied by the additional data in the target strip can characterize the length of the additional data (that is, the more the number of data units occupied, the greater the length of the additional data), the matching redundant storage policy is selected according to the number of data units occupied by the additional data in the target strip, so as to reduce the encoding of invalid data, thereby achieving the above technical effects of improving the generation efficiency and reducing the data space occupancy.

In a possible implementation, as shown in FIG. 4, the specific implementation of step S102 includes the following.

Step S1020: a target number of data units occupied by the additional data in the target strip is acquired.

Step S1021: if the target number is 1, a copy redundant storage policy is obtained, where the copy redundant storage policy is used to generate the restoration record by copying the additional data.

Step S1022: if the target number is greater than 1, an encoding redundant storage policy is obtained, where the encoding redundant storage policy is used to generate the restoration record by performing erasure code encoding on the additional data.

Step S1023: the restoration record of the additional data is generated based on the copy redundant storage policy or the encoding redundant storage policy.

Specifically, in this embodiment, two redundant storage policies are provided, i.e., the copy redundant storage policy and the encoding redundant storage policy. When the target number is 1, the copy redundant storage policy is selected to generate the restoration record. Specifically, when the target number of the storage unit is 1, in this case, there is no need to perform encoding operation, and the additional data is directly copied to form a corresponding restoration record, so as to achieve the purpose of improving the generation efficiency. When the target number is greater than 1, the encoding redundant storage policy is selected to generate the restoration record through erasure code encoding (that is, the redundant encoding referred to in the previous part). In this case, the restoration record generated by using the erasure code encoding (encoding redundant storage policy) has better data generation efficiency and smaller space occupancy compared with directly copying the additional data (copy redundant storage policy).

Further, in a possible implementation, the redundant storage policy includes a target generation mode and a target generation condition for the restoration record, where the target generation mode is information characterizing how to generate the restoration record based on the additional data, and the target generation condition is information characterizing when to generate the restoration record based on the additional data. Accordingly, the specific implementation of step S102 includes: the restoration record of the additional data is generated based on the target generation mode, when the target generation condition is met.

The above target generation mode is the process of generating the restoration record as introduced in the above embodiments, which may refer to the steps in the embodiment shown in FIG. 4 specifically, and will not be repeated in this embodiment. The target generation condition includes a strip state, a concurrent write state of the server, and the like. A specific embodiment is used below to introduce a specific implementation process of generating the restoration record of the additional data based on the target generation mode when the step meets the target generation condition.

In step a, after an event of writing the additional data into the target file occurs, if a complete strip can be formed after the additional data is written into the file end, the target file is immediately subjected to conventional redundant encoding to generate the restoration record, and the restoration record is written into the target file.

In step b, after the event of writing the additional data into the target file occurs, if the condition in step a is not satisfied, but there is no task of generating the restoration record currently being executed, the restoration record of the additional data is immediately generated based on the target generation mode.

In step c, after the event of writing the additional data into the target file occurs, if the conditions in steps a and b are not satisfied, but there is no write operation for the target file currently waiting, the write operation is suspended and waits.

In step d, after the event of writing the additional data into the target file occurs, if the conditions in steps a and b are not satisfied, but there is a write operation for the target file currently waiting, and the current request crosses the strip, the data in the complete strip is immediately redundantly encoded, and after the encoding is completed, it is considered that the previous write request is successful, and the current write request is suspended and waits.

In step e, after the task of generating the restoration record currently being executed is completed, if there is a write request currently waiting, the restoration record of the additional data corresponding to the write request is immediately generated based on the target generation mode.

Based on the above method, for a case of concurrent data writing (pipeline writing), the rule of generating the restoration record is controlled through the target generation condition, and multiple segments of short data are combined into long data for processing, thereby reducing the amount of data and the number of times of generating the restoration record (and writing into the corresponding buffer), especially reducing the amount of data of the restoration record, which can effectively improve the efficiency of writing into the target file. The specific implementation of generating the restoration record of the additional data corresponding to the write request based on the target generation mode is introduced in the previous embodiment and the subsequent embodiments, which will not be repeated in this embodiment.

Further, after the restoration record is generated, the restoration record is directly written into the disk, that is, the process of writing the redundant backup for the additional data into the file is completed. Through the solution of this embodiment, the data on the distributed file is arranged according to a preset strip configuration; for each additional data, the data is segmented according to the strip, and erasure code encoding with a fixed address relationship is generated, and the restoration record is generated according to the rule for the part of data that cannot form a complete strip as required; and the generated several pieces of data are written into corresponding files on the physical disk. Compared with the traditional distributed file using erasure code redundancy, the single write size is not limited, the space waste and write overhead caused by the user filling invalid data to complete the strip are avoided, the storage efficiency is improved, and the difficulty of use by the user is reduced.

In this embodiment, additional data written to a file end of a target file is acquired, where data in the target file is stored based on a strip, and a data end of the additional data is located in a middle of a target strip; a corresponding redundant storage policy is obtained according to an occupancy of the additional data in the target strip, and a restoration record of the additional data is generated based on the redundant storage policy; and the restoration record is written into a disk. When the additional data is written to the end of the file, for a case where the data end is located in the middle of the target strip, the corresponding redundant storage policy is determined according to the occupancy of the additional data in the target strip, and the restoration record is generated based on a generation mode of the restoration record characterized by the redundant storage policy, and finally the restoration record is written into the disk. The influence of different occupancies of the additional data in the target strip on the generation efficiency and space occupancy of the restoration record is considered, so that the generation efficiency of the restoration record generated based on the redundant storage policy can be improved, and the space occupancy of the restoration record is reduced, thereby avoiding the problems of large data volume and low encoding efficiency caused by generating the restoration record by fixedly writing zero values into the strip for rounding.

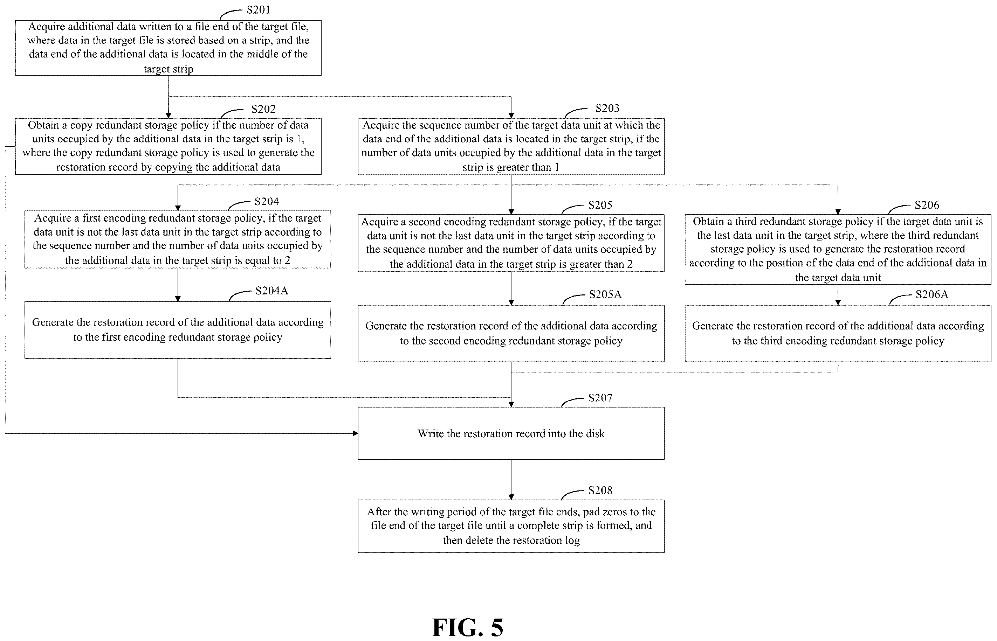

Referring to FIG. 5, which is a second flowchart of a file processing method provided by an embodiment of the present disclosure. In this embodiment, on the basis of the embodiment shown in FIG. 2, the step of determining the redundant storage policy is further refined. The file processing method includes the following.

Step S201: additional data written to a file end of a target file is acquired, where data in the target file is stored based on a strip, and a data end of the additional data is located in a middle of a target strip.

Step S202: if a number of data units occupied by the additional data in the target strip is 1, a copy redundant storage policy is obtained, where the copy redundant storage policy is used to generate a restoration record by copying the additional data.

Step S203: if the number of data units occupied by the additional data in the target strip is greater than 1, a sequence number of a target data unit at which the data end of the additional data is located in the target strip is acquired.

Step S204: if the target data unit is not the last data unit in the target strip according to the sequence number, and the number of data units occupied by the additional data in the target strip is equal to 2, a first encoding redundant storage policy is acquired.

Exemplarily, after the server obtains the additional data, it first judges according to the number of data units occupied by the additional data. If the number of data units occupied by the additional data is 1, the copy redundant storage policy is directly used to generate the restoration record by copying the additional data. This implementation has been introduced in the previous embodiment, and details will not be repeated herein. If the number of data units occupied by the additional data is not 1, a sequence number of a target data unit at which the data end of the additional data is located in the target strip, that is, the position of the data end of the additional data in the target strip, is further acquired. Afterwards, according to the specific sequence number, two cases are processed, that is, the target data unit is the last data unit in the target entry, or the target data unit is not the last data unit in the target entry. In the first case, if the target data unit is not the last data unit in the target strip, and the number of data units occupied by the additional data in the target strip is equal to 2, the first encoding redundant storage policy is acquired to perform subsequent generation steps, where the first encoding redundant storage policy is used to generate the restoration record by copying and erasure code encoding the additional data.

Step S204A: the restoration record of the additional data is generated according to the first encoding redundant storage policy.

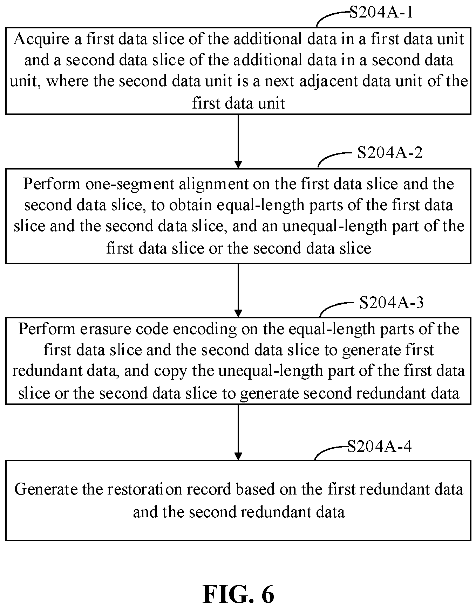

Exemplarily, as shown in FIG. 6, the specific implementation of step S204A includes the following.

Step S204A-1: a first data slice of the additional data in a first data unit and a second data slice of the additional data in a second data unit are acquired, where the second data unit is a next adjacent data unit of the first data unit.

Step S204A-2: one-segment alignment is performed on the first data slice and the second data slice, to obtain equal-length parts of the first data slice and the second data slice, and an unequal-length part of the first data slice or the second data slice.

Step S204A-3: erasure code encoding is performed on the equal-length parts of the first data slice and the second data slice to generate first redundant data, and the unequal-length part of the first data slice or the second data slice is copied to generate second redundant data.

Step S204A-4: the restoration record is generated based on the first redundant data and the second redundant data.

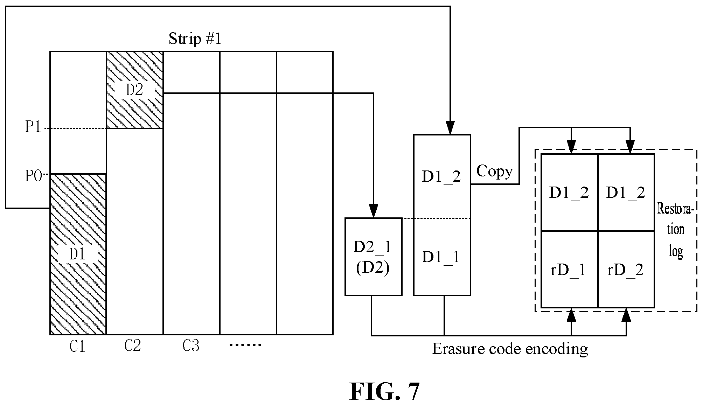

FIG. 7 is a schematic diagram of an execution process of a first encoding redundant storage policy provided by an embodiment of the present disclosure. The above process is further introduced below with reference to FIG. 7. Exemplarily, as shown in FIG. 7, the file end of the target file is located within the strip #1 (the target strip). The strip #1 includes a plurality of data units such as C1, C2, and C3. The file end of the target file is located at the P0 position in the data unit C1 within the strip #1. On this basis, after the additional data continues to be written into the target file, the end of the additional data is located at the P1 position in the data unit C2. The data unit C1 is a first data unit, and the data unit C2 is a second data unit. The first data unit is adjacent to the second data unit, that is, the number of data units occupied by the additional data in the target strip is equal to 2. Afterwards, the first data slice of the additional data in the first data unit, that is, the data D1 between P0 and the end of the data unit C1, and the second data slice of the additional data in the second data unit, that is, the data D2 between the start of the data unit C2 and P1, are acquired. Afterwards, the first data slice and the second data slice are aligned, and the equal-length parts (shown as D1_1 and D2_1 in the figure) are subjected to erasure code encoding to generate two groups of erasure codes (shown as rD_1 and rD_2 in the figure), that is, the first redundant data, where the shorter D2_1 is D2. For the unequal-length part (shown as D1_2 in the figure), equal copying is performed to generate two groups of copy codes, that is, the second redundant data. Finally, the above two groups of erasure codes and two groups of copy codes are combined to obtain the restoration record.

It should be noted that, in the above example, only the case where the data D1 is greater than the data D2 is shown. In other possible cases, the case where the data D1 is less than the data D2 may occur. In this case, the obtained equal-length part is still the common length part of the data D1 and the data D2, while the unequal-length part is the part where the data D2 is more than the data D1, which is contrary to the above example, and the subsequent steps of generating the restoration record are the same and will not be repeated. In the actual application process, it may be executed according to the specific situation.

Step S205: if the target data unit is not the last data unit in the target strip according to the sequence number, and the number of data units occupied by the additional data in the target strip is greater than 2, a second encoding redundant storage policy is acquired.

Further, in the second case, if the target data unit is not the last data unit in the target strip, and the number of data units occupied by the additional data in the target strip is greater than 2, the second encoding redundant storage policy is acquired to perform subsequent generation steps, where the second encoding redundant storage policy is used to generate the restoration record by performing erasure code encoding on the additional data.

Step S205A: the restoration record of the additional data is generated according to the second encoding redundant storage policy.

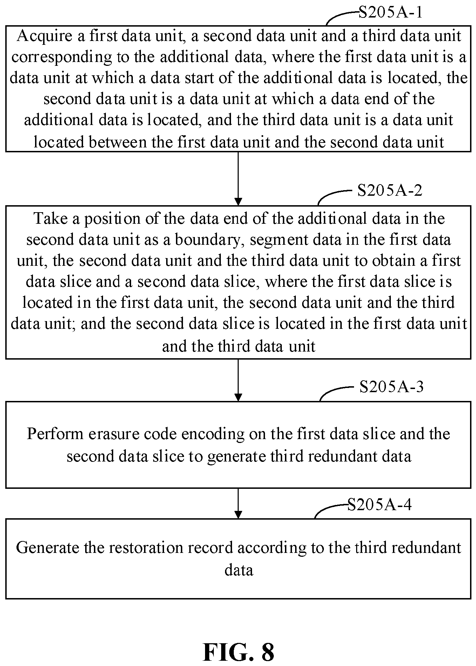

Exemplarily, as shown in FIG. 8, the specific implementation of step S205A includes the following.

Step S205A-1: a first data unit, a second data unit and a third data unit corresponding to the additional data is acquired, where the first data unit is a data unit at which a data start of the additional data is located, the second data unit is a data unit at which a data end of the additional data is located, and the third data unit is a data unit located between the first data unit and the second data unit.

Step S205A-2: a position of the data end of the additional data in the second data unit is taken as a boundary, data in the first data unit, the second data unit and the third data unit is segmented to obtain a first data slice and a second data slice, where the first data slice is located in the first data unit, the second data unit and the third data unit; and the second data slice is located in the first data unit and the third data unit.

Step S205A-3: erasure code encoding is performed on the first data slice and the second data slice to generate third redundant data.

Step S205A-4: the restoration record is generated according to the third redundant data.

Exemplarily, the specific implementation of step S205A-2 includes: taking a unit start of the data unit as an interception start point and taking the position of the data end of the additional data in the second data unit as an interception end point, intercepting corresponding data in the first data unit, the second data unit and the third data unit respectively to obtain the first data slice; and taking the position of the data end of the additional data in the second data unit as an interception start point and taking a unit end of the data unit as an interception end point, intercepting corresponding data in the first data unit and the third data unit respectively to obtain the second data slice.

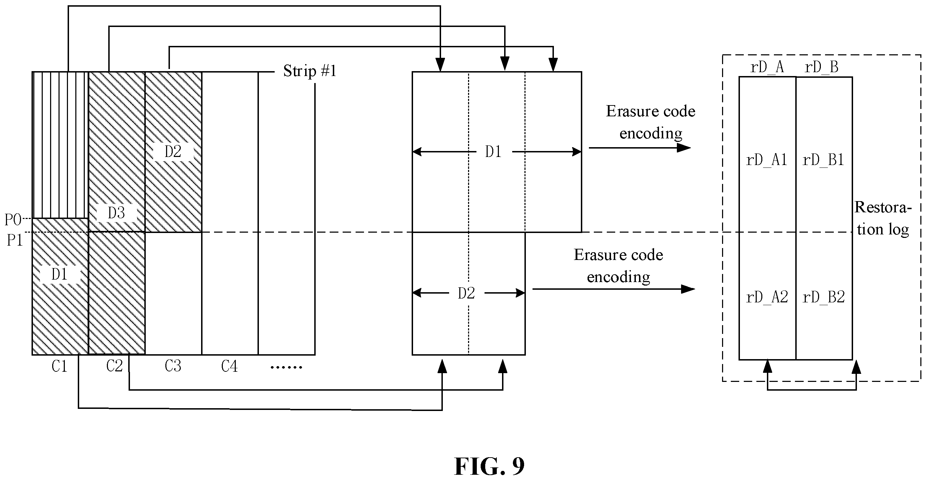

FIG. 9 is a schematic diagram of an execution process of a second encoding redundant storage policy provided by an embodiment of the present disclosure. The above process is further introduced below with reference to FIG. 9. Exemplarily, as shown in FIG. 9, the file end of the target file is located within the strip #1 (the target strip). The strip #1 includes a plurality of data units such as C1, C2, C3, and C4. The file end of the target file is located at the P0 position in the data unit C1 within the strip #1. On this basis, after the additional data continues to be written into the target file, the end of the additional data is located at the P1 position in the data unit C3. The data unit C1 is the first data unit, and the data unit C3 is the second data unit. The data unit between the data unit C1 and the data unit C3 is the third data unit, for example, the data unit C2. It should be noted that when a plurality of data units are spaced between the first data unit and the second data unit, a plurality of third data units are included, such as the data unit C3-1 and the data unit C3-2. That is, the number of data units occupied by the additional data in the target strip is greater than 2.

Afterwards, taking the position of the data end of the additional data in the second data unit, that is, the P1 position, as the boundary, the data in the data unit C1, the data unit C2, and the data unit C3 is segmented to obtain the first data slice D1 located above the P1 position and the second data slice D2 located below the P1 position. As shown in the figure, the first data slice D1 is located in the three data units C1, C2, and C3, and the second data slice D2 is located in the two data units C1 and C2. Afterwards, erasure code encoding is performed on the data D1 and the data D2 to generate third redundant data. The third redundant data includes, for example, two groups of redundant data, that is, rD_A and rD_B, where rD_A includes rD_A1 encoded from D1 and rD_A2 encoded from D2; and similarly, rD_B includes rD_B1 encoded from D1 and rD_B2 encoded from D2. The third redundant data is used as the restoration record.

Step S206: if the target data unit is the last data unit in the target strip, a third redundant storage policy is obtained, where the third redundant storage policy is used to generate the restoration record according to a position of the data end of the additional data in the target data unit.

Further, based on the above steps, if the target data unit is the last data unit in the target strip, since there are few blank bits in the target strip, a special processing strategy, that is, a third encoding redundant storage policy, is used to generate the restoration record. The third redundant storage policy is used to generate the restoration record according to the position of the data end of the additional data in the target data unit, thereby further improving the generation efficiency of the restoration record.

Step S206A: the restoration record of the additional data is generated according to the third encoding redundant storage policy.

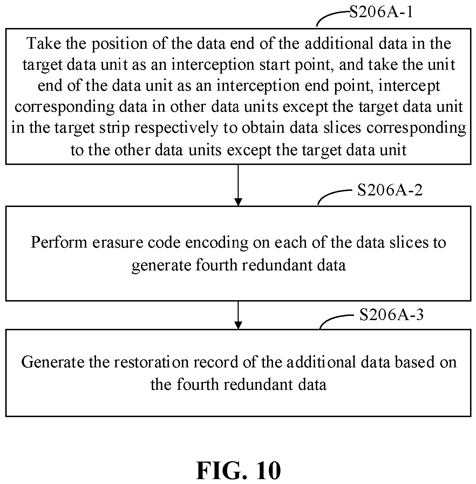

Exemplarily, as shown in FIG. 10, the specific implementation of step S206A includes the following.

Step S206A-1: the position of the data end of the additional data in the target data unit is taken as an interception start point, and a unit end of the data unit is taken as an interception end point, corresponding data in other data units except the target data unit in the target strip is intercepted respectively to obtain data slices corresponding to the other data units except the target data unit.

Step S206A-2: erasure code encoding is performed on each of the data slices to generate fourth redundant data.

Step S206A-3: the restoration record of the additional data is generated based on the fourth redundant data.

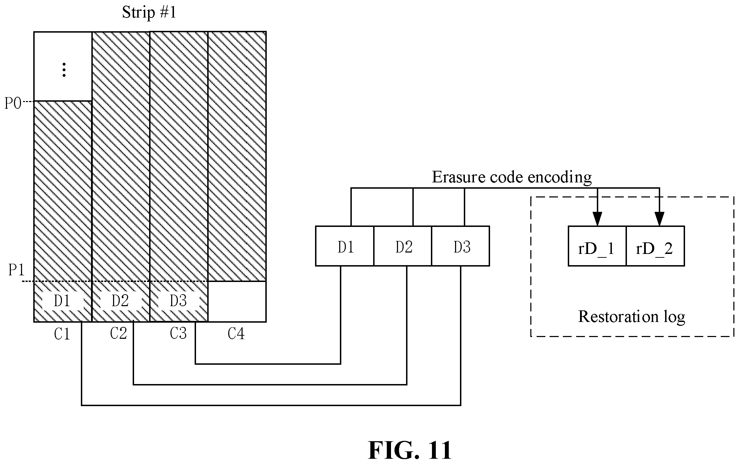

Exemplarily, FIG. 11 is a schematic diagram of an execution process of a third encoding redundant storage policy provided by an embodiment of the present disclosure. The above process is further introduced below with reference to FIG. 11. Exemplarily, as shown in FIG. 11, the file end of the target file is located within the strip #1 (the target strip). The strip #1 includes a plurality of data units such as C1, C2, C3, and C4. The file end of the target file is located at the P0 position in the data unit C1 within the strip #1. On this basis, after the additional data continues to be written into the target file, the end of the additional data is located at the P1 position in the data unit C4. Afterwards, taking the P1 position as an interception start point, and taking the unit ends of the data unit C1, the data unit C2, and the data unit C3 as interception end points, interception is performed to obtain data slices corresponding to the data unit C1, the data unit C2, and the data unit C3, that is, the data slice D1, the data slice D2, and the data slice D3. Afterwards, erasure code encoding is performed on the data slice D1, the data slice D2, and the data slice D3 to generate fourth redundant data, that is, rD_1 and rD_2. Afterwards, the fourth redundant data is used as the restoration record of the additional data. On the other hand, the data slice corresponding to the unit start of the data unit as the interception start point and the P1 position as the interception end point may be directly subjected to erasure code encoding based on the entire target strip for this part since each data unit is covered in the interception area, thereby generating the restoration record corresponding to the target strip. Thus, when the target file is restored subsequently, the restoration of the complete additional data may be realized by combining the restoration record corresponding to the target strip and the restoration record of the additional data generated in the step of this embodiment. After the additional data is segmented and encoded by using the above method, the encoding efficiency of the additional data located at the end of the strip can be improved, and the space occupancy can be reduced.

Step S207: the restoration record is written into a disk.

Step S208: after a writing period of the target file ends, zeros are padding to the file end of the target file until a complete strip is formed, and then a restoration log is deleted.

Exemplarily, the restoration record generated by the server for the additional data is stored in the restoration log, which is also referred to as an R shard. By maintaining the restoration log, the restoration record may be quickly cached and written during the writing period of the target file, thereby improving the reading and writing speed of the file. After the writing period of the target file ends, zeros are padded to the file end of the target file until a complete strip is formed, that is, the target file is supplemented to a form of being stored based on a complete strip. Afterwards, since the target file is hardly written, the restoration log is deleted at this time, thereby releasing memory/disk resources and improving the resource utilization of the system.

In this embodiment, the implementations of step S201 and step S207 are the same as the implementations of step S101 and step S103 in the embodiment shown in FIG. 2 of the present disclosure, which will not be repeated here.

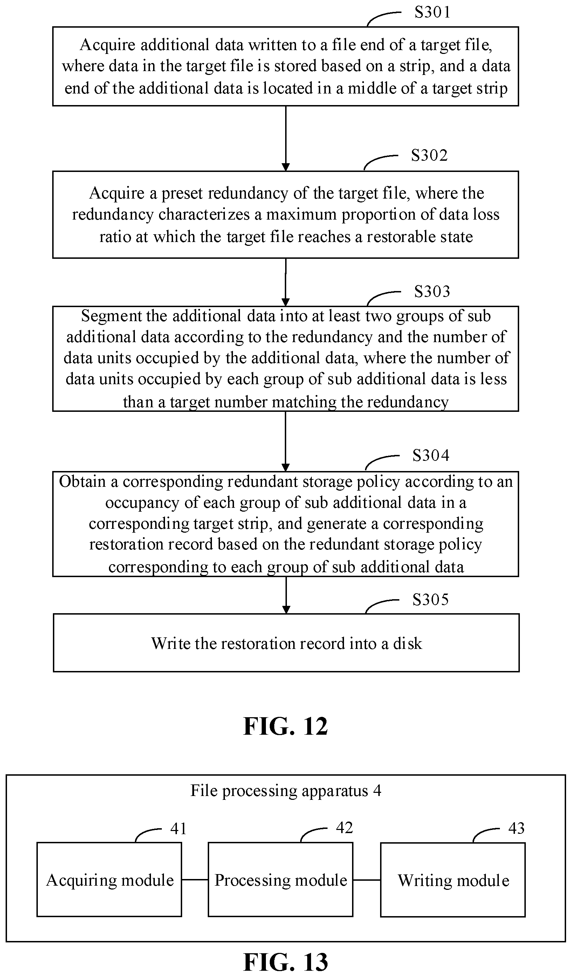

FIG. 12 is a third flowchart of a file processing method provided by an embodiment of the present disclosure. In this embodiment, on the basis of the embodiments shown in FIG. 2 and FIG. 5, a step of adjusting redundancy is further added. The file processing method includes the following.

Step S301: additional data written to a file end of a target file is acquired, where data in the target file is stored based on a strip, and a data end of the additional data is located in a middle of a target strip.

Step S302: a preset redundancy of the target file is acquired, where the redundancy characterizes a maximum proportion of data loss ratio at which the target file reaches a restorable state.

Step S303: the additional data is segmented into at least two groups of sub additional data according to the redundancy and the number of data units occupied by the additional data, where the number of data units occupied by each group of sub additional data is less than a target number matching the redundancy.

Step S304: a corresponding redundant storage policy is obtained according to an occupancy of each group of sub additional data in a corresponding target strip, and generating a corresponding restoration record based on the redundant storage policy corresponding to each group of sub additional data.

Step S305: the restoration record is written into a disk.

Exemplarily, first, the concept of redundancy in the file is introduced. For example, after the data is encoded based on the erasure code, corresponding redundant data will be generated. For example, after the file data is divided into four equal parts, four data slices are obtained. After the above four data slices are subjected to erasure code encoding, two pieces of redundant data may be obtained, and together with the original four data slices, there are six groups of data in total. When the above data is damaged or lost, as long as four groups of data are arbitrarily selected from the above six groups of data, the original file data may be restored. The redundancy in this example is 2/6, which may also be expressed as 33.3%. It can be seen that the more restoration records and the fewer data slices, the greater the redundancy and the higher the data security of the file.

Therefore, in the process of generating the restoration record of the additional data, it is first necessary to determine the preset redundancy required by the target file, and then determine the number of restoration records that need to be generated, so as to ensure that the number of restoration records generated can meet the requirements of the preset redundancy. In this embodiment, the preset redundancy of the target file is first acquired, and then, for the preset redundancy, the actual redundancy of the target file may be made greater than the preset redundancy by adjusting the number of restoration records and/or the number of data slices. In a possible implementation, the number of restoration records is first determined, and the number of restoration records may be determined based on the computing resources of the server, or may be determined by other means, which is not specifically limited this time. After the number of restoration records is determined, the redundancy is controlled by adjusting the number of slice data, that is, the number of data units, for generating the restoration records. Specifically, the redundancy is, for example, 2/4. In a possible implementation, a general configuration is that the number of restoration logs is the same as the number of encoding shards to ensure consistent redundancy. When using a distributed file with a large strip width, it is optional to configure fewer restoration logs than the number of encoding shards to reduce the number of disk writes generated each time, and at the same time, encode the data on incomplete strips separately by partition to achieve similar redundancy. For example, when the strip width is 8 and the redundancy requirement is 8:3 or 4:2, it may be selected to configure 8 data shards, 3 encoding shards, and 2 restoration logs. When generating the restoration record, the data that needs to be protected by the restoration log and falls into the part of the units 0-3 and the units 4-7 is encoded according to the rules respectively, and then combined to generate one restoration record.

According to the redundancy and the number of data units occupied by the additional data, if the number of data units occupied by the additional data is greater than 4, the additional data is divided into two sub additional data. For example, if the number of data units occupied by the additional data is 6, the additional data is divided into two sub write data each occupying 3 data units. Afterwards, for the sub additional data, corresponding restoration records are formed respectively. For example, the original additional data is [AB]. The additional data [AB] corresponds to six data units, and the actual redundancy is 2/6 based on the calculation of the data length, which is less than the preset redundancy of 2/4. In this case, the original additional data [AB] is first segmented into sub additional data A and sub additional data B, and then, two groups of sub restoration records A_1 and A_2 are generated based on the sub additional data A; and two groups of sub restoration records B_1 and B_2 are generated based on the sub additional data B. Finally, the above two groups of sub restoration records are combined respectively to generate two groups of restoration records [A_1, B_1] and [A_2, B_2], and finally the above restoration records are written into the file. Thus, the actual redundancy of the data is 2/4, which meets the requirements of the preset redundancy.

The process of generating the sub restoration record based on the sub additional data may refer to the process of obtaining the corresponding redundant storage policy according to the additional data and generating the restoration record based on the redundant storage policy in FIG. 2-11, which will not be repeated here. On the basis of this embodiment, any solution and step in the embodiment shown in FIG. 2 or FIG. 5 may be further combined to form a new embodiment, which will not be repeated here.

Optionally, in addition, after step S305, the method further includes: once a redundancy requirement for a part of data that cannot be protected by the solidified encoding can be met by a single written of the restoration record into the target file, a restoration record previously written into the restoration log is released after the restoration record is written into the disk. Exemplarily, the target file further includes solidified encoding, where the solidified encoding is used to perform redundant storage on the data in the target file, and the solidified encoding is stored in the encoding shard, which is also referred to as a P shard. The solidified encoding is the data generated after erasure code (EC) encoding. After the data in the target file is segmented, erasure code encoding is performed to generate the solidified encoding, and the solidified encoding is saved through the encoding shard, so that the data in the target file is redundantly stored. Based on the introduction of the previous part, when data is written into the target file based on strip storage, there is data that cannot form a complete strip. Therefore, in the steps of the above embodiments, the restoration record corresponding to each write operation is generated and stored in the restoration log. After the above processing steps, the data in the target file includes the restoration record, the solidified encoding, and the original data shard, where the restoration record and the solidified encoding form a redundant part of the target file.

However, since each write operation may generate a corresponding restoration record and the restoration record is stored in the restoration log, which results in data overstock and redundancy of the restoration log. When a restoration record written into the target file at one time (that is, a restoration record generated by one write operation) can meet a redundancy requirement for a part of data that cannot be protected by the encoding shard, the redundant storage of the data in the target file may be ensured through the restoration record and the solidified encoding generated by the write operation. Therefore, in this case, the restoration records generated previously (write operation) may be deleted, thereby realizing the recovery of storage space and reducing the load of the restoration log. Specifically, exemplarily, in a possible implementation, when the start address and the end address of writing are not in the same strip, since the previous incomplete strip has been filled (recorded by the P shard), in this case, the restoration record corresponding to the previous write operation stored in the restoration log may be deleted. In another possible implementation, for example, in the case shown in FIG. 9, when the start address is in the first unit of the strip, in this case, this encoding has covered all data that has been written into the current last strip. In this case, the restoration record corresponding to the previous write operation stored in the restoration log may be deleted. In yet another possible implementation, for example, in the case shown in FIG. 11, in this case, the parts (D1, D2, D3) that cannot be protected by the P shards may be protected by the restoration record (R shard) encoded this time. In this case, the restoration record corresponding to the previous write operation stored in the restoration log may be deleted. It should be noted that the release action may adjust the released capacity threshold or frequency limit according to the IO characteristics and capacity of the storage device, and it is not limited to performing the corresponding release action every time the above conditions are met.

Through the above steps, the release of the deposited data accumulated in the restoration log may be realized, and the restoration log improves the storage efficiency of the overall abstract file, that is, the ratio of the user data to the total space occupancy.

In this embodiment, the implementations of step S301 and step S305 are the same as the implementations of step S101 and step S103 in the embodiment shown in FIG. 2 of the present disclosure, which will not be repeated here.

Corresponding to the file processing method of the above embodiment, FIG. 13 is a structural block diagram of a file processing apparatus provided by an embodiment of the present disclosure. The method introduced in the above embodiment may be executed by the file processing apparatus, and the apparatus may be implemented in software and/or hardware, and the apparatus may be integrated in an electronic device with a certain data processing function. The electronic device may include, but is not limited to, a mobile terminal with big data processing capability, and a fixed terminal with big data processing capability such as a desktop computer and a supercomputer.

For ease of explanation, only parts related to the embodiments of the present disclosure are shown. Referring to FIG. 13, the file processing apparatus 4 includes an acquiring module 41, a processing module 42, and a writing module 43.

The acquiring module 41 is configured to acquire additional data written to a file end of a target file, where data in the target file is stored based on a strip, and a data end of the additional data is located in a middle of a target strip.

The processing module 42 is configured to obtain a corresponding redundant storage policy according to an occupancy of the additional data in the target strip, and generate a restoration record of the additional data based on the redundant storage policy.

The writing module 43 is configured to write the restoration record into a disk.

According to one or more embodiments of the present disclosure, the strip includes at least two data units; when obtaining the corresponding redundant storage policy according to the occupancy of the additional data in the target strip, the processing module 42 is further configured to: obtain the corresponding redundant storage policy according to the number of data units occupied by the additional data in the target strip.

According to one or more embodiments of the present disclosure, when obtaining the corresponding redundant storage policy according to the number of data units occupied by the additional data in the target strip, the processing module 42 is further configured to: if the number of data units occupied by the additional data in the target strip is 1, obtain a copy redundant storage policy, where the copy redundant storage policy is used to generate the restoration record by copying the additional data; or if the number of data units occupied by the additional data in the target strip is greater than 1, obtain an encoding redundant storage policy, where the encoding redundant storage policy is used to generate the restoration record by performing erasure code encoding on the additional data.

According to one or more embodiments of the present disclosure, the encoding redundant storage policy includes a first encoding redundant storage policy and a second encoding redundant storage policy, where the first encoding redundant storage policy is used to generate the restoration record by copying and erasure code encoding the additional data; the second encoding redundant storage policy is used to generate the restoration record by performing erasure code encoding on the additional data. When performing the step of obtaining the encoding redundant storage policy if the number of data units occupied by the additional data in the target strip is greater than 1, the processing module 42 is further configured to: if the number of data units occupied by the additional data in the target strip is equal to 2, acquire the first encoding redundant storage policy; or if the number of data units occupied by the additional data in the target strip is greater than 2, acquire the second encoding redundant storage policy.

According to one or more embodiments of the present disclosure, the redundant storage policy includes the first encoding redundant storage policy. When generating the restoration record of the additional data based on the redundant storage policy, the processing module 42 is further configured to: acquire a first data slice of the additional data in a first data unit and a second data slice of the additional data in a second data unit, where the second data unit is a next adjacent data unit of the first data unit; perform one-segment alignment on the first data slice and the second data slice to obtain equal-length parts of the first data slice and the second data slice, and unequal-length parts of the first data slice or the second data slice; perform erasure code encoding on the equal-length parts of the first data slice and the second data slice to generate first redundant data, and perform copying on the unequal-length part of the first data slice or the second data slice to generate second redundant data; and generate the restoration record based on the first redundant data and the second redundant data.

According to one or more embodiments of the present disclosure, the redundant storage policy includes the second encoding redundant storage policy. When generating the restoration record of the additional data based on the redundant storage policy, the processing module 42 is further configured to: acquire a first data unit, a second data unit and a third data unit corresponding to the additional data, where the first data unit is a data unit at which a data start of the additional data is located, the second data unit is a data unit at which a data end of the additional data is located, and the third data unit is a data unit located between the first data unit and the second data unit; take a position of the data end of the additional data in the second data unit as a boundary, segment data in the first data unit, the second data unit and the third data unit to obtain a first data slice and a second data slice, where the first data slice is located in the first data unit, the second data unit and the third data unit, and the second data slice is located in the first data unit and the third data unit; perform erasure code encoding on the first data slice and the second data slice to generate third redundant data; and generate the restoration record according to the third redundant data.

According to one or more embodiments of the present disclosure, the processing module 42 is further configured to: acquire a sequence number of the target data unit at which the data end of the additional data is located in the target strip. When obtaining the corresponding redundant storage policy according to the number of data units occupied by the additional data in the target strip, the processing module 42 is further configured to:, if the target data unit is not the last data unit in the target strip according to the sequence number, obtain a corresponding first redundant storage policy or a corresponding second redundant storage policy according to the number of data units occupied by the additional data in the target strip; or if the target data unit is the last data unit in the target strip, obtain a third redundant storage policy, where the third redundant storage policy is used to generate the restoration record according to a position of the data end of the additional data in the target data unit.

According to one or more embodiments of the present disclosure, the redundant storage policy includes a third encoding redundant storage policy. When generating the restoration record of the additional data based on the redundant storage policy, the processing module 42 is further configured to: take the position of the data end of the additional data in the target data unit as an interception start point and take a unit end of the data unit as an interception end point, intercept corresponding data in other data units except the target data unit in the target strip respectively to obtain data slices corresponding to the other data units except the target data unit; perform erasure code encoding on each of the data slices to generate fourth redundant data; and generate the restoration record of the additional data based on the fourth redundant data.

According to one or more embodiments of the present disclosure, the processing module 42 is further configured to: acquire a preset redundancy of the target file, where the redundancy characterizes a maximum proportion of data loss ratio at which the target file reaches a restorable state; segment the additional data into at least two groups of sub additional data according to the redundancy and the number of data units occupied by the additional data, where the number of data units occupied by each group of sub additional data is less than a target number matching the redundancy. The processing module 42 is further configured to: obtain a corresponding redundant storage policy according to an occupancy of each group of sub additional data in a corresponding target strip, and generate a corresponding restoration record based on the redundant storage policy corresponding to each group of sub additional data.

According to one or more embodiments of the present disclosure, the redundant storage policy includes a target generation mode and a target generation condition of the restoration record. When generating the restoration record of the additional data based on the redundant storage policy, the processing module 42 is further configured to: generate the restoration record of the additional data based on the target generation mode when the target generation condition is met.

According to one or more embodiments of the present disclosure, the restoration record generated for the additional data is stored in the restoration log. After writing the restoration record into the disk, the processing module 42 is further configured to: after a writing period of the target file ends, padding zeros to the file end of the target file until a complete strip is formed, and then deleting the restoration log.

According to one or more embodiments of the present disclosure, the target file includes solidified encoding, where the solidified encoding is used to perform redundant storage on the data in the target file, and the restoration record is stored in the restoration log. The writing module 43 is further configured to: once a redundancy requirement for a part of data that cannot be protected by the solidified encoding can be met by a single written of the restoration record into the target file, release, after the restoration record is written into the disk, a restoration record previously written into the restoration log.

The acquiring module 41, the processing module 42, and the writing module 43 are connected in sequence. The file processing apparatus 3 provided in this embodiment may execute the technical solution of the above method embodiments, and the implementation principles and technical effects thereof are similar, which will not be repeated here in this embodiment.

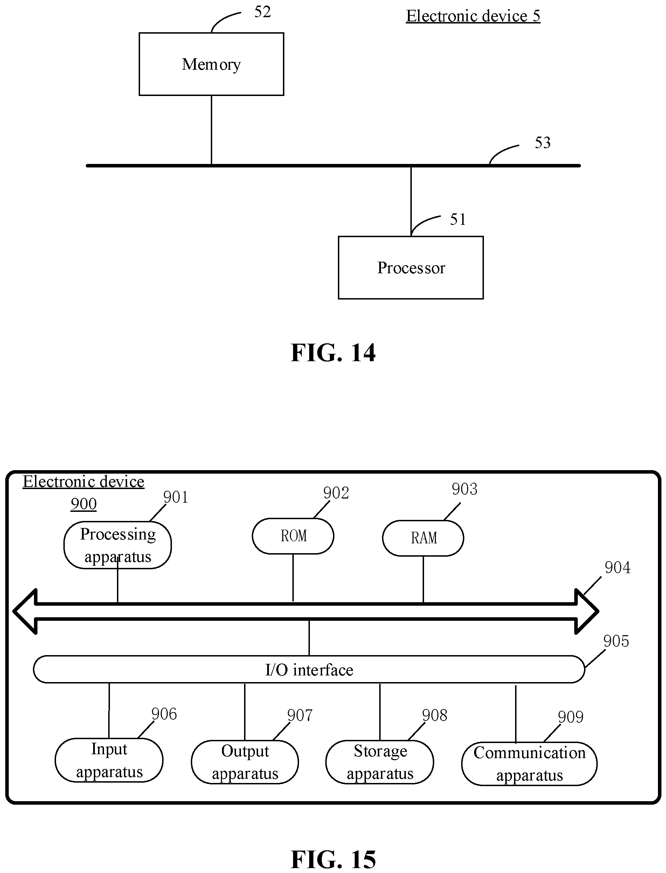

FIG. 14 is a schematic structural diagram of an electronic device provided by an embodiment of the present disclosure. As shown in FIG. 14, the electronic device 5 includes a processor 51 and a memory 52 in communication connection with the processor 51.

The memory 52 stores computer executable instructions.

The processor 51 executes the computer executable instructions stored in the memory 52 to implement the file processing method in the embodiments shown in FIG. 2 to FIG. 12.

Optionally, the processor 51 and the memory 52 are connected through a bus 53.

For relevant description, reference may be made to the relevant description and effects corresponding to the steps in the embodiments corresponding to FIG. 2 to FIG. 12 for understanding, which will not be repeated here.

An embodiment of the present disclosure provides a computer-readable storage medium. The computer-readable storage medium stores computer executable instructions, and the computer executable instructions, when executed by a processor, are used to implement the file processing method provided by any one of the embodiments corresponding to FIG. 2 to FIG. 12 in the present disclosure.

An embodiment of the present disclosure provides a computer program product, including a computer program, and when the computer program is executed by a processor, the file processing method provided by any one of the embodiments corresponding to FIG. 2 to FIG. 12 in the present disclosure is implemented.

In order to implement the above embodiments, an embodiment of the present disclosure further provides an electronic device.

Referring to FIG. 15, it shows a schematic structural diagram of an electronic device 900 suitable for implementing the embodiments of the present disclosure. The electronic device 900 may be a terminal device or a server. The terminal device may include, but is not limited to, mobile terminals such as a mobile phone, a notebook computer, a digital broadcast receiver, a personal digital assistant (abbreviated as PDA), a tablet computer (which is a Portable Android Device), a portable media player (abbreviated as PMP), a vehicle-mounted terminal (such as a vehicle-mounted navigation terminal), etc., and fixed terminals such as a digital TV, a desktop computer, etc. The electronic device shown in FIG. 15 is only an example, and should not bring any limitation to the function and use scope of the embodiments of the present disclosure.

As shown in FIG. 15, the electronic device 900 may include a processing apparatus (such as a central processing unit, a graphics processor, etc.) 901, which may execute various appropriate actions and processing according to a program stored in a read-only memory (abbreviated as ROM) 902 or a program loaded from a storage apparatus 908 into a random access memory (abbreviated as RAM) 903. The RAM 903 also stores various programs and data required for the operation of the electronic device 900. The processing apparatus 901, the ROM 902 and the RAM 903 are connected to each other through a bus 904. An input/output (I/O) interface 905 is also connected to the bus 904.

Generally, the following apparatus may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (abbreviated as LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although FIG. 15 shows the electronic device 900 with various apparatuses, it should be understood that not all of the illustrated apparatuses are required to be implemented or provided. More or fewer apparatuses may be implemented or provided alternatively.

In particular, according to the embodiment of the present disclosure, the process described above with reference to the flowcharts may be implemented as a computer software program. For example, an embodiment of the present disclosure includes a computer program product, which includes a computer program carried on a computer-readable medium, and the computer program contains program codes for executing the method shown in the flowcharts. In such an embodiment, the computer program may be downloaded and installed from a network through the communication apparatus 909, or installed from the storage apparatus 908, or installed from the ROM 902. When the computer program is executed by the processing apparatus 901, the above functions defined in the method of the embodiment of the present disclosure are executed.

It should be noted that the above-mentioned computer-readable medium in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program that may be used by or in combination with an instruction execution system, apparatus, or device. In the present disclosure, the computer-readable signal medium may include a data signal propagated in a baseband or as part of a carrier, and computer-readable program codes are carried in the data signal. The data signal propagated in this manner may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes contained on the computer-readable medium may be transmitted by any suitable medium, including but not limited to a wire, an optical cable, a radio frequency (RF), etc., or any suitable combination thereof.

The above computer-readable medium may be included in the above electronic device; or may also exist alone without being assembled into the electronic device.

The above computer-readable medium carries one or more programs, and when the above one or more programs are executed by the electronic device, the electronic device is caused to execute the method shown in the above embodiments.

The computer program codes for executing the operations of the present disclosure may be written in one or more programming languages or a combination thereof. The above programming languages include object-oriented programming languages such as Java, Smalltalk, C++, and also include conventional procedural programming languages such as "C" language or similar programming languages. The program codes may be executed entirely on the user's computer, partly on the user's computer, as a stand-alone software package, partly on the user's computer and partly on a remote computer, or entirely on the remote computer or server. In the scenario involving the remote computer, the remote computer may be connected to the user's computer through any type of network, including a local area network (abbreviated as LAN) or a wide area network (abbreviated as WAN), or the connection may be made to an external computer (for example, through the Internet using an Internet service provider).

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, a program segment, or a portion of codes, which includes one or more executable instructions for implementing specified logic functions. It should also be noted that, in some alternative implementations, the functions noted in the blocks may occur out of the order noted in the drawings. For example, two blocks shown in succession may, in fact, be executed substantially concurrently, or the blocks may sometimes be executed in the reverse order, depending upon the functionality involved. It should also be noted that each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units or modules involved in the embodiments described in the present disclosure may be implemented in software or hardware. The name of the unit or module does not constitute a limitation of the unit itself under certain circumstances.

The functions described herein above may be performed, at least partially, by one or more hardware logic components. For example, without limitation, exemplary types of hardware logic components that can be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination of the above. More specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

In a first aspect, one or more embodiments of the present disclosure provide a file processing method, including: acquiring additional data written to a file end of a target file, where data in the target file is stored based on a strip, and a data end of the additional data is located in a middle of a target strip; obtaining a corresponding redundant storage policy according to an occupancy of the additional data in the target strip, and generating a restoration record of the additional data based on the redundant storage policy, where the redundant storage policy is at least used to characterize a generation mode of the restoration record; and writing the restoration record into a disk.

According to one or more embodiments of the present disclosure, the strip includes at least two data units; and the obtaining the corresponding redundant storage policy according to the occupancy of the additional data in the target strip includes: obtaining the corresponding redundant storage policy according to the number of data units occupied by the additional data in the target strip.

According to one or more embodiments of the present disclosure, the obtaining the corresponding redundant storage policy according to the number of data units occupied by the additional data in the target strip includes: in accordance with a determination that the number of data units occupied by the additional data in the target strip is 1, obtaining a copy redundant storage policy, where the copy redundant storage policy is used to generate the restoration record by copying the additional data; or in accordance with a determination that the number of data units occupied by the additional data in the target strip is greater than 1, obtaining an encoding redundant storage policy, where the encoding redundant storage policy is used to generate the restoration record by performing erasure code encoding on the additional data.

According to one or more embodiments of the present disclosure, the encoding redundant storage policy includes a first encoding redundant storage policy and a second encoding redundant storage policy, where the first encoding redundant storage policy is used to generate the restoration record by performing copying and erasure code encoding on the additional data; and where the second encoding redundant storage policy is used to generate the restoration record by performing erasure code encoding on the additional data; and in accordance with the determination that the number of data units occupied by the additional data in the target strip is greater than 1, obtaining the encoding redundant storage policy includes: in accordance with a determination that the number of data units occupied by the additional data in the target strip is equal to 2, acquiring the first encoding redundant storage policy; or in accordance with a determination that the number of data units occupied by the additional data in the target strip is greater than 2, acquiring the second encoding redundant storage policy.

According to one or more embodiments of the present disclosure, the redundant storage policy includes the first encoding redundant storage policy, and the generating the restoration record of the additional data based on the redundant storage policy includes: acquiring a first data slice of the additional data in a first data unit and a second data slice of the additional data in a second data unit, where the second data unit is a next adjacent data unit of the first data unit; performing one-segment alignment on the first data slice and the second data slice to obtain equal-length parts of the first data slice and the second data slice, and unequal-length parts of the first data slice or the second data slice; performing erasure code encoding on the equal-length parts of the first data slice and the second data slice to generate first redundant data, and performing copying on the unequal-length part of the first data slice or the second data slice to generate second redundant data; and generating the restoration record based on the first redundant data and the second redundant data.

According to one or more embodiments of the present disclosure, the redundant storage policy includes the second encoding redundant storage policy, and the generating the restoration record of the additional data based on the redundant storage policy includes: acquiring a first data unit, a second data unit and a third data unit corresponding to the additional data, where the first data unit is a data unit at which a data start of the additional data is located, the second data unit is a data unit at which a data end of the additional data is located, and the third data unit is a data unit located between the first data unit and the second data unit; taking a position of the data end of the additional data in the second data unit as a boundary, segmenting data in the first data unit, the second data unit and the third data unit to obtain a first data slice and a second data slice, where the first data slice is located in the first data unit, the second data unit and the third data unit, and the second data slice is located in the first data unit and the third data unit; performing erasure code encoding on the first data slice and the second data slice to generate third redundant data; and generating the restoration record according to the third redundant data.

According to one or more embodiments of the present disclosure, the method further includes: acquiring a sequence number of the target data unit at which the data end of the additional data is located in the target strip. The obtaining the corresponding redundant storage policy according to the number of data units occupied by the additional data in the target strip includes: in accordance with a determination that the target data unit is not the last data unit in the target strip according to the sequence number, obtaining a corresponding first redundant storage policy or a corresponding second redundant storage policy according to the number of data units occupied by the additional data in the target strip; or in accordance with a determination that the target data unit is the last data unit in the target strip, obtaining a third redundant storage policy, where the third redundant storage policy is used to generate the restoration record according to a position of the data end of the additional data in the target data unit.

According to one or more embodiments of the present disclosure, the redundant storage policy includes a third encoding redundant storage policy, and the generating the restoration record of the additional data based on the redundant storage policy includes: taking the position of the data end of the additional data in the target data unit as an interception start point and taking a unit end of the data unit as an interception end point, intercepting corresponding data in other data units except the target data unit in the target strip respectively to obtain data slices corresponding to the other data units except the target data unit; performing erasure code encoding on each of the data slices to generate fourth redundant data; and generating the restoration record of the additional data based on the fourth redundant data.

According to one or more embodiments of the present disclosure, the method further includes: acquiring a preset redundancy of the target file, where the redundancy characterizes a maximum proportion of data loss ratio at which the target file reaches a restorable state; segmenting the additional data into at least two groups of sub additional data according to the redundancy and the number of data units occupied by the additional data, where the number of data units occupied by each group of sub additional data is less than a target number matching the redundancy. The obtaining the corresponding redundant storage policy according to the occupancy of the additional data in the target strip, and generating the restoration record of the additional data based on the redundant storage policy includes: obtaining a corresponding redundant storage policy according to an occupancy of each group of sub additional data in a corresponding target strip, and generating a corresponding restoration record based on the redundant storage policy corresponding to each group of sub additional data.

According to one or more embodiments of the present disclosure, the redundant storage policy includes a target generation mode and a target generation condition of the restoration record. The generating the restoration record of the additional data based on the redundant storage policy includes: in response to the target generation condition being met, generating the restoration record of the additional data based on the target generation mode.

According to one or more embodiments of the present disclosure, the restoration record generated for the additional data is stored in the restoration log. After writing the restoration record into the disk, the method further includes: after the writing period of the target file ends, padding zeros to the file end of the target file until a complete strip is formed, and then deleting the restoration log.

According to one or more embodiments of the present disclosure, the target file includes solidified encoding, where the solidified encoding is used to perform redundant storage on the data in the target file, and the restoration record is stored in the restoration log. The method further includes: once a redundancy requirement for a part of data that cannot be protected by the solidified encoding can be met by a single written of the restoration record into the target file, releasing, after the restoration record is written into the disk, a restoration record previously written into the restoration log.

In a second aspect, one or more embodiments of the present disclosure provide a file processing apparatus, including: an acquiring module, configured to acquire additional data written to a file end of a target file, where data in the target file is stored based on a strip, and a data end of the additional data is located in a middle of a target strip; a processing module, configured to obtain a corresponding redundant storage policy according to an occupancy of the additional data in the target strip, and generate a restoration record of the additional data based on the redundant storage policy; and a writing module, configured to write the restoration record into a disk.

According to one or more embodiments of the present disclosure, the strip includes at least two data units; when obtaining the corresponding redundant storage policy according to the occupancy of the additional data in the target strip, the processing module is further configured to: obtain the corresponding redundant storage policy according to the number of data units occupied by the additional data in the target strip.

According to one or more embodiments of the present disclosure, when obtaining the corresponding redundant storage policy according to the number of data units occupied by the additional data in the target strip, the processing module is further configured to: in accordance with a determination that the number of data units occupied by the additional data in the target strip is 1, obtain a copy redundant storage policy, where the copy redundant storage policy is used to generate the restoration record by copying the additional data; or in accordance with a determination that the number of data units occupied by the additional data in the target strip is greater than 1, obtain an encoding redundant storage policy, where the encoding redundant storage policy is used to generate the restoration record by performing erasure code encoding on the additional data.

According to one or more embodiments of the present disclosure, the encoding redundant storage policy includes a first encoding redundant storage policy and a second encoding redundant storage policy, where the first encoding redundant storage policy is used to generate the restoration record by copying and erasure code encoding the additional data; and the second encoding redundant storage policy is used to generate the restoration record by performing erasure code encoding on the additional data; when performing the step of obtaining the encoding redundant storage policy in accordance with a determination that the number of data units occupied by the additional data in the target strip is greater than 1, the processing module is further configured to: in accordance with a determination that the number of data units occupied by the additional data in the target strip is equal to 2, acquire the first encoding redundant storage policy; or in accordance with a determination that the number of data units occupied by the additional data in the target strip is greater than 2, acquire the second encoding redundant storage policy.

According to one or more embodiments of the present disclosure, the redundant storage policy includes the first encoding redundant storage policy. When generating the restoration record of the additional data based on the redundant storage policy, the processing module is further configured to: acquire a first data slice of the additional data in a first data unit and a second data slice of the additional data in a second data unit, where the second data unit is a next adjacent data unit of the first data unit; perform one-segment alignment on the first data slice and the second data slice to obtain equal-length parts of the first data slice and the second data slice, and unequal-length parts of the first data slice or the second data slice; perform erasure code encoding on the equal-length parts of the first data slice and the second data slice to generate first redundant data, and perform copying on the unequal-length part of the first data slice or the second data slice to generate second redundant data; and generate the restoration record based on the first redundant data and the second redundant data.

According to one or more embodiments of the present disclosure, the redundant storage policy includes the second encoding redundant storage policy. When generating the restoration record of the additional data based on the redundant storage policy, the processing module is further configured to: acquire a first data unit, a second data unit and a third data unit corresponding to the additional data, where the first data unit is a data unit at which a data start of the additional data is located, the second data unit is a data unit at which a data end of the additional data is located, and the third data unit is a data unit located between the first data unit and the second data unit; take a position of the data end of the additional data in the second data unit as a boundary, segment data in the first data unit, the second data unit and the third data unit to obtain a first data slice and a second data slice, where the first data slice is located in the first data unit, the second data unit and the third data unit, and the second data slice is located in the first data unit and the third data unit; perform erasure code encoding on the first data slice and the second data slice to generate third redundant data; and generate the restoration record according to the third redundant data.

According to one or more embodiments of the present disclosure, the processing module is further configured to: acquire a sequence number of the target data unit at which the data end of the additional data is located in the target strip. When obtaining the corresponding redundant storage policy according to the number of data units occupied by the additional data in the target strip, the processing module is further configured to: in accordance with a determination that the target data unit is not the last data unit in the target strip according to the sequence number, obtain a corresponding first redundant storage policy or a corresponding second redundant storage policy according to the number of data units occupied by the additional data in the target strip; or in accordance with a determination that the target data unit is the last data unit in the target strip, obtain a third redundant storage policy, where the third redundant storage policy is used to generate the restoration record according to a position of the data end of the additional data in the target data unit.

According to one or more embodiments of the present disclosure, the redundant storage policy includes a third encoding redundant storage policy. When generating the restoration record of the additional data based on the redundant storage policy, the processing module is further configured to: take the position of the data end of the additional data in the target data unit as an interception start point and take a unit end of the data unit as an interception end point, intercept corresponding data in other data units except the target data unit in the target strip respectively to obtain data slices corresponding to the other data units except the target data unit; perform erasure code encoding on each of the data slices to generate fourth redundant data; and generate the restoration record of the additional data based on the fourth redundant data.

According to one or more embodiments of the present disclosure, the processing module is further configured to: acquire a preset redundancy of the target file, where the redundancy characterizes a maximum proportion of data loss ratio at which the target file reaches a restorable state; segment the additional data into at least two groups of sub additional data according to the redundancy and the number of data units occupied by the additional data, where the number of data units occupied by each group of sub additional data is less than a target number matching the redundancy. The processing module is further configured to: obtain a corresponding redundant storage policy according to an occupancy of each group of sub additional data in a corresponding target strip, and generate a corresponding restoration record based on the redundant storage policy corresponding to each group of sub additional data.

According to one or more embodiments of the present disclosure, the redundant storage policy includes a target generation mode and a target generation condition of the restoration record. When generating the restoration record of the additional data based on the redundant storage policy, the processing module is further configured to: in response to the target generation condition being met, generate the restoration record of the additional data based on the target generation mode.

According to one or more embodiments of the present disclosure, the restoration record generated for the additional data is stored in the restoration log. After writing the restoration record into the disk, the processing module is further configured to: after the writing period of the target file ends, pad zeros to the file end of the target file until a complete strip is formed, and then delete the restoration log.

According to one or more embodiments of the present disclosure, the target file includes solidified encoding, where the solidified encoding is used to perform redundant storage on the data in the target file, and the restoration record is stored in the restoration log. The writing module is further configured to: once a redundancy requirement for a part of data that cannot be protected by the solidified encoding can be met by a single written of the restoration record into the target file, release, after the restoration record is written into the disk, a restoration record previously written into the restoration log.

In a third aspect, one or more embodiments of the present disclosure provide an electronic device, including: at least one processor and a memory; the memory stores computer executable instructions; and the at least one processor executes the computer executable instructions stored in the memory to cause the at least one processor to execute the file processing method according to the above first aspect and various possible designs of the first aspect.

In a fourth aspect, one or more embodiments of the present disclosure provide a computer-readable storage medium, where the computer-readable storage medium stores computer executable instructions, and when a processor executes the computer executable instructions, the file processing method according to the above first aspect and various possible designs of the first aspect is implemented.

In a fifth aspect, one or more embodiments of the present disclosure provide a computer program product, including a computer program, where when the computer program is executed by a processor, the file processing method according to the above first aspect and various possible designs of the first aspect is implemented.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the technical solutions formed by replacing the above features with the technical features with similar functions disclosed in the present disclosure (but not limited to).

In addition, although operations are depicted in a particular order, this should not be understood as requiring that such operations are performed in the particular order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A file processing method, comprising:
acquiring (S101, S201, S301) additional data written to a file end of a target file, wherein data in the target file is stored based on a strip, and a data end of the additional data is located in a middle of a target strip;
obtaining (S102) a corresponding redundant storage policy according to an occupancy of the additional data in the target strip;
generating (S102) a restoration record of the additional data based on the redundant storage policy, wherein the redundant storage policy is at least used to characterize a generation mode of the restoration record; and
writing (S103, S207, S305) the restoration record into a disk.

2. The method according to claim 1, wherein the strip comprises at least two data units; and wherein obtaining the corresponding redundant storage policy according to the occupancy of the additional data in the target strip comprises:
obtaining the corresponding redundant storage policy according to a number of data units occupied by the additional data in the target strip.

3. The method according to claim 2, wherein obtaining the corresponding redundant storage policy according to the number of data units occupied by the additional data in the target strip comprises:
in accordance with a determination that the number of data units occupied by the additional data in the target strip is 1, obtaining (S1021, S202) a copy redundant storage policy, wherein the copy redundant storage policy is used to generate the restoration record by copying the additional data; or
in accordance with a determination that the number of data units occupied by the additional data in the target strip is greater than 1, obtaining (S1022) an encoding redundant storage policy, wherein the encoding redundant storage policy is used to generate the restoration record by performing erasure code encoding on the additional data.

4. The method according to claim 3, wherein the encoding redundant storage policy comprises a first encoding redundant storage policy and a second encoding redundant storage policy, wherein the first encoding redundant storage policy is used to generate the restoration record by performing copying and erasure code encoding on the additional data, and wherein the second encoding redundant storage policy is used to generate the restoration record by performing erasure code encoding on the additional data; and
wherein in accordance with the determination that the number of data units occupied by the additional data in the target strip is greater than 1, obtaining the encoding redundant storage policy comprises:
in accordance with a determination that the number of data units occupied by the additional data in the target strip is equal to 2, acquiring (S204) the first encoding redundant storage policy; or
in accordance with a determination that the number of data units occupied by the additional data in the target strip is greater than 2, acquiring (S205) the second encoding redundant storage policy.

5. The method according to claim 2, wherein the redundant storage policy comprises a first encoding redundant storage policy, and wherein generating the restoration record of the additional data based on the redundant storage policy comprises:
acquiring (S204A-1) a first data slice of the additional data in a first data unit and a second data slice of the additional data in a second data unit, wherein the second data unit is a next adjacent data unit of the first data unit;
performing (S204A-2) one-segment alignment on the first data slice and the second data slice to obtain equal-length parts of the first data slice and the second data slice, and unequal-length parts of the first data slice or the second data slice;
performing (S204A-3) erasure code encoding on the equal-length parts of the first data slice and the second data slice to generate first redundant data, and performing (S204A-3) copying on an unequal-length part of the first data slice or the second data slice to generate second redundant data; and
generating (S204A-4) the restoration record based on the first redundant data and the second redundant data.

6. The method according to claim 2, wherein the redundant storage policy comprises a second encoding redundant storage policy, and wherein generating the restoration record of the additional data based on the redundant storage policy comprises:
acquiring (S205A-1) a first data unit, a second data unit, and a third data unit corresponding to the additional data, wherein the first data unit is a data unit at which a data start of the additional data is located, the second data unit is a data unit at which a data end of the additional data is located, and the third data unit is a data unit located between the first data unit and the second data unit;
taking (S205A-2) a position of the data end of the additional data in the second data unit as a boundary, segmenting (S205A-2) data in the first data unit, the second data unit, and the third data unit to obtain a first data slice and a second data slice, wherein the first data slice is located in the first data unit, the second data unit, and the third data unit, and the second data slice is located in the first data unit and the third data unit;
performing (S205A-3) erasure code encoding on the first data slice and the second data slice to generate third redundant data; and
generating (S205A-4) the restoration record according to the third redundant data.

7. The method according to claim 2, further comprising:
acquiring (S203) a sequence number of the target data unit at which the data end of the additional data is located in the target strip; and
wherein obtaining the corresponding redundant storage policy according to the number of data units occupied by the additional data in the target strip comprises:
in accordance with a determination that the target data unit is not a last data unit in the target strip according to the sequence number, obtaining (S204, S205) a corresponding first redundant storage policy or a corresponding second redundant storage policy according to the number of data units occupied by the additional data in the target strip; or
in accordance with a determination that the target data unit is the last data unit in the target strip, obtaining (S206) a third redundant storage policy, wherein the third redundant storage policy is used to generate the restoration record according to a position of the data end of the additional data in the target data unit.

8. The method according to claim 7, wherein the redundant storage policy comprises a third encoding redundant storage policy, and wherein generating the restoration record of the additional data based on the redundant storage policy comprises:
taking (S206A-1) the position of the data end of the additional data in the target data unit as an interception start point and taking (S206A-1) a unit end of the data unit as an interception end point, intercepting (S206A-1) corresponding data in other data units except the target data unit in the target strip respectively to obtain data slices corresponding to the other data units except the target data unit;
performing (S206A-2) erasure code encoding on each of the data slices to generate fourth redundant data; and
generating (S206A-3) the restoration record of the additional data based on the fourth redundant data.

9. The method according to claim 2, further comprising:
acquiring (S302) a preset redundancy of the target file, wherein the redundancy characterizes a maximum data loss ratio at which the target file reaches a restorable state; and
segmenting (S303) the additional data into at least two groups of sub additional data according to the redundancy and the number of data units occupied by the additional data, wherein a number of data units occupied by each group of sub additional data is less than a target number matching the redundancy; and
wherein obtaining the corresponding redundant storage policy according to the occupancy of the additional data in the target strip, and generating the restoration record of the additional data based on the redundant storage policy comprises:
obtaining (S304) a corresponding redundant storage policy according to an occupancy of each group of sub additional data in a corresponding target strip, and generating (S304) a corresponding restoration record based on the redundant storage policy corresponding to each group of sub additional data.

10. The method according to claim 1, wherein the redundant storage policy comprises a target generation mode and a target generation condition of the restoration record, and wherein generating the restoration record of the additional data based on the redundant storage policy comprises:
in response to the target generation condition being met, generating the restoration record of the additional data based on the target generation mode.

11. The method according to claim 1, wherein the restoration record is stored in a restoration log; and wherein,
after writing (S207) the restoration record into the disk, the method further comprises:
after a writing period of the target file ends, padding (S208) zeros to the file end of the target file until a complete strip is formed, and then deleting the restoration log.

12. The method according to claim 1, wherein the target file comprises solidified encoding being used to perform redundant storage on data in the target file, and the restoration record is stored in a restoration log, and wherein the method further comprises:
once a redundancy requirement for a part of data that cannot be protected by the solidified encoding can be met by a single written of the restoration record into the target file, releasing, after the restoration record is written into the disk, a restoration record previously written into the restoration log.

13. A file processing apparatus (4), comprising:
an acquiring module (41), configured to acquire additional data written to a file end of a target file, wherein data in the target file is stored based on a strip, and a data end of the additional data is located in a middle of a target strip;
a processing module (42), configured to obtain a corresponding redundant storage policy according to an occupancy of the additional data in the target strip, and generate a restoration record of the additional data based on the redundant storage policy; and
a writing module (43), configured to write the restoration record into a disk.

14. An electronic device (5, 900), comprising: a processor (51) and a memory (52);
wherein the memory stores computer executable instructions; and
wherein the processor executes the computer executable instructions stored in the memory to cause the processor to execute the file processing method according to any of claims 1 to 12.

15. A computer-readable storage medium, wherein the computer-readable storage medium stores computer executable instructions that, when executed by a processor, implement the file processing method according to any of claims 1 to 12.
